# EUROPÄISCHE PATENTSCHRIFT

(11) **EP 3 774 667 B1**
(45) Veröffentlichungstag und Bekanntmachung des Hinweises auf die Patenterteilung: **21.06.2023**
(21) Anmeldenummer: 19715870.2
(22) Anmeldetag: 29.03.2019
(51) Int. Cl.: C02F 1/44, B01D 61/02, C02F 1/28, C02F 1/76

(54) **VORRICHTUNG UND VERFAHREN ZUM AUFBEREITEN VON TRINKWASSER**
APPARATUS AND METHOD FOR PREPARING POTABLE WATER
DISPOSITIF ET MÉTHODE POUR LA PRÉPARATION DE L'EAU POTABLE

(30) Priorität: 29.03.2018 DE 102018107596
(43) Veröffentlichungstag der Anmeldung: 17.02.2021
(73) Patentinhaber: BWT AG, 5310 Mondsee (AT)
(72) Erfinder: JOHANN, Jürgen, 69226 Nußloch (DE); FINK, Mark, 79540 Lörrach (DE); SCHWAIGER, Mathias, 5221 Lochen am See (AT); KUES, Werner, 5203 Köstendorf (AT); HASCHKA, Lorenz, 5340 Sankt Gilgen (AT)
(74) Vertreter: Friderichs, Gunther
(86) Internationale Anmeldenummer: PCT/EP2019/058079
(87) Internationale Veröffentlichungsnummer: WO 2019/185908

(56) Entgegenhaltungen:
- EP-A1- 2 992 945
- DE-A1-102016 101 000
- US-A- 5 256 279
- US-A1- 2005 205 478
- US-A1- 2007 256 977
- US-A1- 2017 106 339
- US-B1- 6 290 856

## Beschreibung

### Gebiet der Erfindung

Die Erfindung betrifft eine Vorrichtung und ein Verfahren zum Aufbereiten von Trinkwasser.

### Hintergrund der Erfindung

Es ist bekannt, Trinkwasser im Rahmen von Verfahren zur Wasseraufbereitung mittels Umkehrosmose ("reverse osmosis", "RO") aufzubereiten. Dabei werden Umkehrosmoseanlagen eingesetzt, in welchen eine semipermeable Membran derart in einem Behälter angeordnet ist, dass sie diesen in zwei Kammern trennt. Die semipermeable Membran ist für einen oder mehrere im Wasser gelöste Stoffe undurchlässig. Mit Hilfe der semipermeablen Membran kann die Konzentration dieser Stoffe im Wasser verringert werden, indem Rohwasser ("Feed") in den Behälter geleitet und dabei mit Druck gegen die Membran gepresst wird.

Dabei passieren die Wassermoleküle die Membran und verlassen dabei die erste Kammer, wobei die betreffenden gelösten Stoffe von der Membran zurückgehalten werden und sich in der ersten Kammer ansammeln. Die die Membran passierenden Wassermoleküle gelangen in die zweite Kammer des Behälters und bilden den Hauptbestandteil des als sogenanntes "Permeat" aus der Umkehrosmoseanlage entnommenen Wassers. Die von der semipermeablen Membran zurückgehaltenen Stoffe werden im sogenannten "Konzentrat" beziehungsweise "Abwasser" angereichert.

Umkehrosmoseanlagen sind aus den Dokumenten DE 10 2016 101000 A1, US 2007/256977 A1, EP 2 992 945 A1 und US 6,290,856 B1 bekannt.

Umkehrosmoseanlagen werden in der Regel so lange betrieben, bis sich Aufgrund von Verschmutzungen und Verkrustungen der Membran ein so schlechter Wirkungsgrad einstellt, dass sich ein Weiterbetrieb nicht mehr lohnt und die Membran getauscht oder gereinigt werden muss.

Ein weiterer Nachteil von Umkehrosmoseanlagen, welche im diskontinuierlichen Betrieb genutzt werden, liegt darin, dass im Stand-By Betrieb auf der Feedbeziehungsweise Konzentratseite der RO-Membran eine Flüssigkeit steht, in der Regel Wasser, welche eine Konzentration an Ionen gelöster Salze oder organischer Inhaltstoffe aufweist, deren Wert der Mittelwert der Konzentration zwischen Feed und Konzentrat ist. Die Konzentration der Ionen kann anhand der Leitfähigkeit des Wassers erfasst werden.

Das folgende Beispiel verdeutlicht diese Problematik. Die "Ausbeute" der Umkehrosmose wird dabei als Verhältnis zwischen der Menge an praktisch salzfreiem Permeat und der Zulaufmenge angegeben. Je höher dieser Wert liegt, desto weniger Konzentrat fällt an.

Fall 1: Bei einer Leitfähigkeit des Zulaufs von 500 µS/cm (Mikrosiemens pro Zentimeter) und einer Ausbeute der Umkehrosmose von 50 % beträgt die Leitfähigkeit im Konzentrat ca. 1000 µS/cm. Daraus ergibt sich eine mittlere Konzentration auf der Konzentratseite der Membran von 750 µS/cm.

Fall 2: Bei einer Leitfähigkeit des Zulaufs von 500 µS/cm (Mikrosiemens pro Zentimeter) und einer Ausbeute der Umkehrosmose von 75 % beträgt die Leitfähigkeit im Konzentrat ca. 2000 µS/cm. Daraus ergibt sich eine mittlere Konzentration auf der Konzentratseite der Membran von 1250 µS/cm.

Somit ist ein Konzentrationsgradient zwischen Konzentrat und Permeat vorhanden, welcher in der Regel größer ist als 20 µS/cm. Folglich diffundieren die Salze, Schwermetalle, und andere Schadstoffe, welche im Betrieb um mindestens 98 % zurückgehalten werden, im Stand-By dennoch auf die Permeatseite. Die Diffusion endet erst bei Konzentrationsausgleich. Schon nach einigen Minuten im Stand-By wird das Permeat daher verunreinigt.

Dies liegt daran, dass jede Membran eine gewisse Salzrückhalterate aufweist. Diese wird hier mit 98 % angegeben, manche Hersteller geben auch eine Salzrückhalterate von 95 % an. Ein geringer Anteil der Salze, also 2 % beziehungsweise 5 %, gelangt daher dennoch auf die Permeatseite, da in der Realität keine Membran alle Stoffe vollständig zurückhält. Im Stand-By Modus erfolgt dieser Stofftransport durch Diffusion, da die Teilchen sich aus Bereichen mit hoher Konzentration (also von der Konzentratseite der Membran) in Bereiche mit geringer Konzentration (also die Permeatseite der Membran) bewegen.

Diffusion ist der ohne äußere Einwirkung eintretende Ausgleich von Konzentrationsunterschieden als natürlich ablaufender physikalischer Prozess aufgrund der Brown'schen Molekularbewegung. Bei ungleichmäßiger Verteilung bewegen sich statistisch mehr Teilchen aus Bereichen hoher in Bereiche geringer Konzentration beziehungsweise Teilchendichte als umgekehrt. Durch Diffusion erfolgt auch ein Stoffaustausch über eine semipermeable Membran, wobei gelöste Moleküle aus hochkonzentrierten in schwachkonzentrierte Lösungen wandern. So kommt es innerhalb relativ kurzer Zeit zu einem nicht unerheblichen Anstieg der Konzentration von Stoffen im Permeat. Dies ist unerwünscht.

Im Falle von Umkehrosmosen unter Tisch am "Point of Use" sind die Stagnationszeiten, das heißt die Dauer des "Stand-By"-Zustandes, sehr lange, da nur wenige Liter Wasser pro Tag entnommen werden; somit erfolgen wenig Wasserbezüge. Die Permeatqualität ist dabei zum Beginn des Bezugs meist sehr schlecht.

Das Permeat kann daher von Zeit zu Zeit gespült werden. Problem hierbei ist jedoch, dass die Spülleitung dabei mit dem Abwasserkanal verbunden ist und somit Bakterien in das Permeat gelangen können.

### Aufgabe der Erfindung

Der Erfindung liegt demgegenüber die Aufgabe zugrunde, die genannten Nachteile des Standes der Technik zumindest zu reduzieren.

Es ist insbesondere eine Aufgabe der Erfindung, ein Verfahren sowie eine Vorrichtung zur Aufbereitung von Trinkwasser mittels Umkehrosmose bereitzustellen, welche die Lebensdauer der semipermeablen Membran beziehungsweise die Ausbeute der Umkehrosmoseanlage verbessert.

Es ist insbesondere eine weitere Aufgabe der Erfindung, ein Verfahren sowie eine Vorrichtung zur Aufbereitung von Trinkwasser mittels Umkehrosmose bereitzustellen, bei welcher im diskontinuierlichen Betrieb die Rückversalzung des Permeats reduziert und insbesondere im Wesentlichen unterbunden wird.

### Lösung mittels der Erfindung

Die Aufgabe der Erfindung wird bereits mit einem Verfahren für die Aufbereitung von Trinkwasser gelöst, bei welchem in einem Entnahmebetriebszustand aufzubereitendes Trinkwasser im Umkehrosmosebetrieb durch eine semipermeable Membran gefördert und in Permeat und Konzentrat getrennt wird, und bei welchem während eines Ruhebetriebszustands ein Teil des Permeats mittels eines Überdrucks durch die Membran tritt und dadurch das Konzentrat auf der Konzentratseite der Membran verdrängt und gegebenenfalls vorhandene Ablagerungen auf der Konzentratseite der Membran ablöst.

Die Erfindung wird des Weiteren durch eine Vorrichtung zum Aufbereiten von Trinkwasser, gelöst, welche zumindest einen Umkehrosmosebehälter aufweist, welcher von zumindest einer semipermeablen Membran in zumindest zwei Kammern unterteilt wird, wobei eine erste Kammer einen Einlass für das aufzubereitende Wasser und einen Auslass für das Konzentrat und eine zweite Kammer einen Auslass für das aufbereitete Wasser, aufweist, und wobei die Vorrichtung zumindest einen Druckbehälter umfasst, welcher mit dem Auslass des Umkehrosmosebehälters für das aufbereitete Wasser flüssigkeitsleitend verbunden ist, wobei die Vorrichtung derart ausgebildet ist, dass in einem Ruhebetriebszustand aufbereitetes Wasser vom dem Druckbehälter aus durch die semipermeable Membran in die erste Kammer fließt.

Gemäß der Erfindung wird zum Rückspülen der Membran alleine reines Permeat verwendet. Es wird kein anderes Fluid, insbesondere kein Gas wie Druckluft oder ähnliches, in die Permeatleitung eingeleitet, um Permeat entgegen der Strömungsrichtung im Entnahmezustand von seiten der zweiten Kammer aus durch die Membran in die erste Kammer zu drücken. Damit erlaubt die Erfindung eine besonders einfache und hygienische Bauweise der Vorrichtung zum Aufbereiten von Trinkwasser.

Der oben beschriebenen unerwünschten Diffusion von der Konzentratseite zur Permeatseite der Membran wird durch die erfindungsgemäße Rückspülung entgegengewirkt. Das Permeat verdrängt das Konzentrat auf der Konzentratseite der semipermeablen Membran. Vorzugsweise beträgt daher die Leitfähigkeit auf beiden Seiten der Membran weniger als 100 µS/cm (Mikrosiemens pro Zentimenter), und es kommt während des Stand-By Modus zu keiner Aufkonzentration des Permeats. Je größer der Drucktank, umso mehr Konzentrat kann verdrängt werden und umso geringer ist die Leitfähigkeit nach dem Ruhebetriebszustand beziehungsweise einer Stagnationsphase.

Gemäß der Erfindung fließt also während eines Entnahmestopps das Permeat in einen Drucktank, wodurch im Drucktank ein Permeatvorrat angelegt und unter Druck gesetzt wird, wobei infolge dieses Druckes während des Ruhebetriebszustands das im Drucktank gespeicherte Permeat zumindest teilweise mittels des Überdrucks durch die Membran tritt und dadurch das Konzentrat auf der Konzentratseite der Membran verdrängt und gegebenenfalls vorhandene Ablagerungen auf der Konzentratseite der Membran ablöst.

Die Bezeichnung als "erste" beziehungsweise "zweite" Kammer wurde hier lediglich zur Unterscheidung der Bauteile gewählt.

Zum Einstellen des Verhältnisses zwischen Konzentratstrom und Permeatstrom kann im Rahmen der Erfindung insbesondere eine Drosseleinrichtung in der Konzentratleitung eingesetzt werden. Die Drosseleinrichtung kann in einfacher Weise als Blende oder als Drosselventil, Drosselklappe oder Kapillare ausbildet oder beispielsweise auch ein sogenannter "Flow Restrictor" sein, welcher eine Drosselung per Venturi-Düse erreicht. Prinzipiell kann zum Einstellen des Verhältnisses zwischen Konzentratstrom und Permeatstrom jede Vorrichtung verwendet werden, welche den Durchfluss des Konzentrats begrenzt. Es könnte sogar ein Drucktank in der Konzentratleitung eingesetzt werden, da auch durch den erhöhten Gegendruck der Durchfluss gedrosselt wird. Ebenfalls möglich ist die Messung der Leitfähigkeit des Permeats und darüber die Regelung des Verhältnisses des Permeatstroms zum Konzentratstrom, beispielsweise über ein Stellventil.

Um eine längere Lebensdauer der Membran und/oder einen besseren Wirkungsgrad der Anlage zu ermöglichen, wird gemäß der Erfindung auf der Permeatseite ein Drucktank installiert. Über diesen Drucktank kann mit der vorliegenden Erfindung die RO-Membran rückgespült werden. Es gibt dabei keine Verbindung der Permeatleitung, welche sich an den Auslass der zweiten Kammer des Umkehrosmosebehälters anschließt, mit dem Abwasserkanal. Das Wasser auf der Konzentratseite, das heißt in der ersten Kammer des Umkehrosmosebehälters, wird bei der Rückspülung gemäß der Erfindung durch Permeat, welches mit geringem Druck über die Membran ins Konzentrat transportiert wird, verdrängt. Auf der Konzentratseite steht nach der Rückspülung insbesondere Wasser mit einer Permeatqualität von weniger als 100 µS/cm zur Verfügung. Der Konzentrationsgradient über die semipermeable Membran zwischen dem Inhalt der ersten und dem Inhalt der zweiten Kammer ist mit Hilfe der Erfindung quasi Null.

Somit ermöglicht die Erfindung bei jeder Wasserentnahme aus der Vorrichtung, und dies unabhängig von der Stagnationszeit, immer eine sehr gute Wasserqualität.

Des Weiteren wird gemäß der Erfindung durch die Permeatrückspülung das sogenannte "Scaling", das heißt die Belagbildung durch schwer lösliche Stoffe wie etwa CaCO₃, SiO₂, CaSO₄ etc., und/oder das sogenannte "Fouling", also die Verschmutzung der Membran, insbesondere durch Mikroorganismen ("Biofouling") immer wieder von der semipermeablen Membran abgelöst. Dadurch ist es mit Hilfe der Erfindung möglich, die Umkehrosmose mit einer Ausbeute von mehr als 75 % dauerhaft zu betreiben.

Die Erfindung bezieht sich in erster Linie auf sogenannte Untertisch-Umkehrosmoseanlagen für Trinkwasser in Haushalten. Zusätzlich kann zu einer derartigen Anlage ein weiterer Drucktank zugeschaltet werden für den Fall, dass die Umkehrosmose zu wenig Leistung liefert, um bei Öffnen des der Vorrichtung zugeordneten Wasserhahns zuverlässig eine hinreichende Menge Wasser abzugeben. Dieser zusätzliche Drucktank befindet sich bei Untertisch-Umkehrosmoseanlagen auf der Permeatseite und soll sicherstellen, dass immer eine genügend große Menge Permeat entnommen werden kann. Zur Membranseite hin ist ein Rückschlagventil verbaut, um zu verhindern, dass die Membran durch den hohen Druck des Tanks (> 2 bar) beschädigt wird.

Die Funktion dieses zusätzlichen Drucktanks ist also eine Förderung genau entgegengesetzt dem Drucktank gemäß der Erfindung, mit welcher Permeat zurück durch die Umkehrosmoseanlage gefördert wird.

Dieser Drucktank kann also auch ein Tank sein, in welchem ein unter Druck stehendes Gasreservoir, beispielsweise ein Luftreservoir, komprimiert wird, etwa über eine Membran oder einen Kolben, und so das Wasser unter einem mindestens erforderlichen Druck hält.

Bei üblichen Umkehrosmoseanlagen wird über einen Rückflussverhinderer sichergestellt, dass sich der Drucktank in der Permeatleitung nicht in die falsche Richtung entleert. Dies würde auch die für die Umkehrosmose verwendete Membran beschädigen.

Im Gegensatz zu einer derartigen Verhinderung des Rückflusses wird gemäß der Erfindung die Umkehrosmose zum Reinigen der semipermeablen Membran beziehungsweise zum Verdrängen von Konzentrat aus dem Drucktank durch die zweite Kammer des Umkehrosmosebehälters in Gegenrichtung betrieben, so dass das Konzentrat aus der ersten Kammer verdrängt wird. Hierfür ist der Drucktank auf der Permeatseite vorgesehen. Stattdessen kann beispielsweise auch, wie unten noch näher beschrieben, eine Pumpe verwendet werden. Wird im Rahmen der Erfindung ein zusätzlicher Drucktank zur Aufrechterhaltung einer genügend großen Permeatabgabe benötigt, sollte sich dieser hinter dem erfindungsgemäßen Rückspültank befinden und mittels eines Rückflussverhinderers zur RO-Seite abgesichert sein.

Während bei bekannten Umkehrsmoseanlagen die Konzentrat-Seite mit Wasser gespült wird, wird gemäß der Erfindung im Spülmodus auf der Permeatseite ein Druck angelegt, so dass das Wasser in die andere Richtung durch die Membran fließt.

Hierdurch werden Verschmutzungen und Verkrustungen aber auch hohe Konzentrationen von Ionen auf der Membran oder in deren Nähe entfernt. Damit wird die Lebensdauer der Membran deutlich erhöht.

Durch den erfindungsgemäßen Rückfluss durch die semipermeable Membran hindurch wird zudem das Wasser auf der Konzentratseite verdrängt und auf eine ähnlich niedrige Leitfähigkeit gebracht wie auf der gegenüberliegenden Seite. Es ist damit auf der Permeatseite von Anfang an Wasser mit niedriger Leitfähigkeit vorhanden.

Bevorzugte Ausführungsformen und Weiterbildungen der Erfindung sind dem Gegenstand der abhängigen Ansprüche, der Beschreibung sowie den Zeichnungen zu entnehmen.

In einer vorteilhaften Ausführungsform hat der Drucktank ein Fassungsvermögen im Bereich zwischen etwa 0,1 L bis 5 L, bevorzugt beträgt das Volumen des Drucktanks etwa 1 L. Damit ist es möglich, die Vorrichtung mit Abmessungen zu bauen, die einen Betrieb in üblichen Haushalten, insbesondere Küchen beziehungsweise Bädern, als Untertischinstallation erlaubt.

Gemäß einer weiteren vorteilhaften Ausführungsform der Erfindung ist die Vorrichtung für den stromlosen Betrieb ausgebildet. Das heißt, es sind alleine wasserführende Leitungen verbaut und der Betrieb erfolgt alleine hydraulisch. Dazu sieht die Erfindung vor, dass der Druckbehälter ein elastisches Material umfasst. Das elastische Material ist insbesondere derart dimensioniert und angeordnet, dass es in einem Entnahmebetriebszustand der Vorrichtung gedehnt wird, so dass sich in dem elastischen Material eine Rückstellspannung einstellt, welche im Ruhebetriebszustand der Vorrichtung zur Entspannung des Materials führt, wodurch aufbereitetes Wasser vom dem Druckbehälter aus durch die semipermeable Membran in die erste Kammer zurückfließt.

In einer ersten Variante wir dies realisiert, indem der Druckbehälter eine elastische Membran umfasst. In bevorzugter Weise wird dafür ein Druckbehälter mit einer Gummimembran verwendet, die Vorrichtung wird also stromlos betrieben. Das erfindungsgemäße Rückspülen aus den Druckbehälter erfolgt dabei aufgrund des während der Wasserentnahme und damit während des Füllens des Druckbehälters mit Permeat in dem Druckbehälter aufgebauten Druckes, welcher dadurch insbesondere höher ist als der Druck in der zweiten und auch in der ersten Kammer des Umkehrosmosebehälters.

In einer weiteren Ausführungsform der Erfindung ist dazu vorgesehen, dass der Druckbehälter als Schlauch aus elastischem Material, insbesondere als Silikonschlauch, ausgebildet ist.

Wird anstelle eines herkömmlichen Drucktanks gemäß dieser Weiterbildung der Erfindung ein elastisches Material wie ein Silikonschlauch als "Druck- und Permeatspeicher" verwendet, dehnt sich dieser Silikonschlauch bei der "Befüllung" oder bei einer eingedrosselten Durchströmung aus und zieht sich wieder zusammen, wenn der Leitungsdruck wieder absinkt. Dadurch wird das Permeat zur Rückspülung wieder durch die semipermeable Membran gedrückt.

Folgende Vorteile konnten beim Einsatz eines Silikonschlauchs zur Rückspülung beziehungsweise Abspülung einer semipermeablen Membran in einer Umkehrosmoseeinrichtung festgestellt werden:
1.) Ein Silikonschlauch ist im Betrieb hygienischer als ein kleiner Drucktank, da Silikon statt EPDM verwendet wird und eine kleinere Berührungsfläche besteht, das im Silikonschlauch befindliche Volumen an Permeat wird je nach Einbau zur Gänze ausgetauscht.
2.) Die Einbaugröße ist geringer.
3.) Die Herstellkosten sind geringer gegenüber einem Drucktank.
4.) Die erfindungsgemäße Ausführungsform ist wartungsarm, da kein Vordruck eingestellt oder kontrolliert werden muss. Eine "PLUG&PLAY"-Montage ist möglich.
5.) Im Silikonschlauch steht je nach Einbausituation kein bis sehr wenig Wasser.
6.) Bestehende Systeme können einfacher nachgerüstet werden.
7.) Solche "Drucktanks" mit einem Silikonschlauch können beliebig erweitert werden. Eine modulare Bauweise wird durch die Erfindung möglich.
8.) Ein Silikonschlauch ist auch als Permeatlagertank nach der Umkehrosmoseanlage verwendbar.

Insbesondere als alternative Ausführungsform stellt die Erfindung eine Weiterbildung zur Verfügung, bei welcher die Vorrichtung als Druckbehälter einen Vorratsbehälter aufweist, welcher mit einer Pumpe verbunden ist. Die Pumpe wird durch Ansprechen auf das Abschalten der Umkehrosmose eingeschaltet und setzt den Inhalt des Vorratsbehälters unter Druck, so dass die Membran mit Permeat aus dem Vorratsbehälter durchspült wird. Die Vorrichtung kann daher im Rahmen der Erfindung auch mit Strom betrieben werden.

Durch die automatische Rückspülung gemäß der Erfindung werden also einerseits Verschmutzungen und Verkrustungen auf der Konzentratseite der semipermeablen Membran des Umkehrosmosebehälters abgelöst und über die Konzentratleitung ins Abwasser transportiert. Andererseits wird durch die Rückspülung der RO-Membran zudem das auf der Konzentratseite verbliebene Wasser durch Permeat verdrängt. Beide Vorgänge erfolgen gemäß der Erfindung durch einen Überdruck auf der Permeatseite. Um diesen Überdruck zu erzeugen, gibt es unterschiedliche Möglichkeiten wie die beiden oben beschriebenen, die der Fachmann im Rahmen der Erfindung anhand der vorgegebenen Rahmenbedingungen wie etwa gewünschte Entnahmemengen, Qualität des Rohwassers und/oder erwartete Stand-by Zeiten wählt und auch kumulativ einsetzten kann. Wichtig für die Realisierung dieser Vorteile der Erfindung ist, dass die Vorrichtung permeatseitig nicht mit einer Abwasserleitung verbunden ist.

Zur Unterstützung des Reinigungseffektes und zur Desinfektion kann dem Rohwasser im Rahmen der Erfindung ein Desinfektionsmittel, z. B Chlor, beispielsweise als Chlorgas Cl₂, zugesetzt werden. Dazu weist die Vorrichtung in einer weiteren Ausführungsform der Erfindung eine Zugabeeinrichtung für Chlor auf. Die Zugabeeinrichtung ist mit einer Leitung für das aufzubereitende Wasser, insbesondere mit dem Einlass der ersten Kammer des Umkehrosmosebehälters für das aufzubereitende Wasser, verbunden.

Die Zugabeeinrichtung kann beispielsweise Chlorgas in Stahlgasflaschen oder Chlorfässern bereitstellen, wobei das Chlorgas aus dem betreffende Gebinde über zumindest einen Dosierregler mittels einer Injektordüse dem Rohwasser zugemischt wird. Der zur Injektion benötigte Druck wird über eine Druckerhöhungspumpe erzeugt, welche Teil der Zugabeeinrichtung ist. Der Dosierregler regelt die für die gewünschte Desinfektionswirkung des eingesetzten Rohwassers benötigte Chlorgasmenge, die der Fachmann vorab bestimmt.

Die Zugabeeinrichtung kann im Rahmen der Erfindung jedoch auch für andere Chlorungsverfahren ausgebildet sein, beispielsweise um Natriumhypochlorid oder gelöstes Calciumhypochlorid über eine Dosierpumpe dem Rohwasser zuzugeben.

Das Chlor kann gemäß der Erfindung dem Permeat auf der Permeatseite wieder entzogen werden. Diese Weiterbildung der Erfindung wird in Ländern eingesetzt, in denen eine Chlorung von Trinkwasser untersagt ist. Dazu sieht die Erfindung vor, dass die Vorrichtung eine Absorptionseinrichtung, für ein Desinfektionsmittel, insbesondere für Chlor, aufweist, welche mit einer Leitung für das Permeat, insbesondere mit dem Auslass der zweiten Kammer des Umkehrosmosebehälters für das aufbereitete Wasser, verbunden ist. Insbesondere ist die Absorptionseinrichtung als Kohleblock oder Aktivkohlefilter ausgebildet.

Damit wird auch sichergestellt, dass bei der erfindungsgemäßen Rückspülung die semipermeable Membran nicht mit dem Desinfektionsmittel, z. B. Chlor beaufschlagt wird. In der sogenannten Stagnationsphase, das heißt der Dauer des Stand-by-Zustandes, kommt kein Chlor oder ein anderes Desinfektionsmittel mit der Membran in Kontakt, da das Chlor oder ein anderes Desinfektionsmittel durch die Absorptionseinrichtung dem Permeat entzogen wurde und die Rückspülung dadurch mit sauberem Permeat erfolgt. Dies erhöht ebenfalls die Lebensdauer der Membran, da lediglich bei der Wasserentnahme die Membran mit Chlor oder einem anderen Desinfektionsmittel beaufschlagt ist.

In einer vorteilhaften Weiterbildung der Erfindung ist der Umkehrosmosebehälter als Filterkerze ausgebildet. Damit wird es möglich, die erfindungsgemäße Vorrichtung sehr kompakt zu bauen.

Eine entsprechende Filterkerze ist im Rahmen der Erfindung insbesondere derart ausgebildet, dass der Einlass und die Auslässe in eine ortsfest installierbare Basiseinheit integriert sind und der Umkehrosmosebehälter als Wechseleinheit vorliegt, welche lösbar mit der Basiseinheit verbunden ist. Durch ihren einfachen Aufbau in Verbindung mit dem wechselbaren Umkehrosmosebehälter ist eine derartige Vorrichtung zur Aufbereitung von Trinkwasser mittels Umkehrosmose besonders für die Anwendung in Privathaushalten geeignet.

Wenn eine Membran des als Wechseleinheit vorliegenden Umkehrosmosebehälters schließlich durch Fouling- und Scaling-Vorgänge doch zu stark belastet ist, kann die Umkehrosmoseeinrichtung einfach ausgetauscht werden. Der Wechselvorgang ist aufgrund der Modularität der erfindungsgemäßen Vorrichtung mit Filterkerze als Umkehrosmosebehälter dabei denkbar einfach. Vor der ersten Inbetriebnahme wird die Basiseinheit installiert, beispielsweise fest in eine Trinkwasserleitung verbaut. Von einem späteren Wechsel des Umkehrosmosebehälters wird die Basiseinheit dann nicht mehr tangiert. Der Wechsel kann entsprechend problemlos auch von Nicht-Fachleuten vorgenommen werden.

Um einen einfachen Austausch des Umkehrosmosebehälters zu ermöglichen, weist die ortsfest installierbare Basiseinheit in bevorzugten Ausführungsformen eine Aufnahme für die Wechseleinheit auf, vorzugsweise eine Aufnahme, in welche die Wechseleinheit eingeschraubt werden kann. Bevorzugt weist die Aufnahme ein Innengewinde auf und die Wechseleinheit ein hierzu passendes Außengewinde.

Natürlich kommen auch andere technische Möglichkeiten zum lösbaren Verbinden der Basiseinheit und der Wechseleinheit in Frage, beispielsweise eine Schnappverbindung.

Die verwendete Filterkerze für den Umkehrosmosebehälter ist bevorzugt eine solche mit Wickelaufbau. Sie weist bevorzugt eine Umkehrosmosemembran auf, die um ein perforiertes Rohr gewickelt ist, das zum Sammeln und Abführen des Permeats (kurz: Permeatsammelrohr) dient. Bei solchen Umkehrosmosebehältern ist in bevorzugten Ausführungsformen eine beidseitig verklebte oder verschweißte Membrantasche an ihrem offenen Ende mit dem Permeatsammelrohr verbunden und um das Rohr aufgewickelt. Abstandshaltermatter sowohl innerhalb der Membrantasche als auch zwischen den aufgewickelten Lagen der Membrantasche ermöglichen auf der Permeat- und auf der Konzentratseite das Zu- und Abführen von Wasser.

Besonders bevorzugt liegt die Membran in Form eines zylindrischen Wickels vor, der zwei stirnseitige Enden, im Folgenden auch als erste und zweite Stirnseite bezeichnet, aufweist. Innerhalb des Behälters ist dieser Wickel bevorzugt derart angeordnet, dass die erste Stirnseite in Richtung des Kopfteils und die zweite Stirnseite in Richtung des Bodens weist.

Die oben beschriebene erfindungsgemäße Vorrichtung zur Aufbereitung von Trinkwasser kann vorteilhafter Weise im Rahmen einer Untertisch-Umkehrosmoseanlage für Trinkwasser in Haushalten umfassend eine derartige Vorrichtung sowie eine Rohwasserleitung für die Zuführung von aufzubereitendem Wasser, eine Entnahmeleitung für aufbereitetes Wasser und eine Abwasserleitung zur Abfuhr von Konzentrat eingesetzt werden.

Damit kann in einfacher Weise Trinkwasser zum Beispiel durch Installation einer derartigen Untertisch-Umkehrosmoseanlage unter der Arbeitsplatte einer Küche mit dem Wasseranschluss für die Spüle als Zufuhr in die Rohwasserleitung und Entnahme durch den entsprechenden Wasserhahn gewonnen werden. Gerade wenn der Umkehrosmosebehälter der Vorrichtung zum Aufbereiten von Trinkwasser als Filterkerze ausgebildet ist, kann die Größe einer Untertisch-Umkehrosmoseanlage gegenüber herkömmlichen Anlagen deutlich reduziert werden, was für den Einbau unter einer haushaltsüblichen Spüle äußerst günstig ist.

In einer bevorzugten Ausführungsform weist dabei die Untertisch-Umkehrosmoseanlage ein Absperrventil auf, welches die Rohwasserleitung und die Entnahmeleitung derart koppelt, dass bei Öffnen des Ventils gleichzeitig aufzubereitendes Wasser der Umkehrosmose zugeführt und aufbereitetes Wasser entnommen wird. Dieses Absperrventil kann an das Ventil des Wasserhahns gekoppelt sein oder dieses ersetzen.

Im Rahmen der Erfindung kann das Absperrventil auch derart ausgebildet sein, dass es dafür sorgt, dass sich bei geschlossenem Ventil des Wasserhahns die Vorrichtung zum Aufbereiten von Trinkwasser mit Rohwasser befüllen und damit einen Druck aufbauen kann. Wird das Ventil des Wasserhahns geöffnet, kann somit sofort Wasser entnommen werden. Da das Absperrventil gemäß einer Ausführungsform der Erfindung zwar die Entnahme unterbricht, nicht jedoch den Zustrom von Rohwasser, wird die Konzentratseite, also die erste Kammer des Umkehrosmosebehälters, ständig durchströmt.

Das Absperrventil kann insbesondere derart ausgebildet sein, dass es nach der Beendigung der Wasserentnahme, also z.B. nach dem Schließen des Wasserhahns, noch so lange Rohwasser über die Konzentratseite fließen lässt, bis sich auf der Permeatseite wieder Druck aufgebaut hat, insbesondere der Druckbehälter wieder unter Druck steht. Erst dann schließt das Absperrventil den Rohwasserzufluss zur Konzentratseite.

Ein Absperrventil für eine Umkehr-Osmoseanlage ist z.B. in dem Dokument US 2011/180464 A1 beschrieben.

Ein Absperrventil, welches die Rohwasserleitung und die Entnahmeleitung derart koppelt, dass bei Öffnen des Ventils gleichzeitig aufzubereitendes Wasser der Umkehrosmose zugeführt und aufbereitetes Wasser entnommen wird, kann in einer weiteren Ausführungsform der Erfindung auch in Strömungsrichtung gesehen vor der ersten Kammer des Umkehrosmosebehälters, also konzentratseitig, positioniert sein, wobei die Vorrichtung zum Aufbereiten von Trinkwasser des Weiteren einen Druckwächter umfasst, welcher in Strömungsrichtung gesehen nach der zweiten Kammer des Umkehrosmosebehälters, also permeatseitig, positioniert ist, und welcher kommunizierend mit dem Abschaltventil verbunden ist. Ist das Abperrventil geschlossen, liegt konzentratseitig kein Druck an der Membran des Umkehrosmosebehälters aus der ersten Kammer heraus an, da kein Wasser in die erste Kammer zufließt. Dann wird unter Wirkung des erfindungsgemäßen Druckspeichers aufbereitetes Wasser von der Permeatleitung aus in die zweite Kammer und damit durch die Membran gefördert. Auch wenn die Anlage stillsteht, wird daher konzentratseitiges Eingangswasser zumindest teilweise von Permeat verdrängt.

Die Erfindung stellt des Weiteren ein Verfahren für die Aufbereitung von Trinkwasser zur Verfügung, insbesondere unter Verwendung einer oben beschriebenen Vorrichtung, bei welchem in einem Entnahmebetriebszustand aufzubereitendes Trinkwasser im Umkehrosmosebetrieb durch eine semipermeable Membran gefördert und in Permeat und Konzentrat getrennt wird, wobei ein erster Anteil des Permeats als aufbereitetes Trinkwasser entnommen wird. Dabei fließt im Entnahmebetriebszustand ein zweiter Anteil des Permeats in einen Drucktank, wodurch im Drucktank ein Permeatvorrat angelegt und unter Druck gesetzt wird. Bei dem erfindungsgemäßen Verfahren wird in einem Ruhebetriebszustand Permeat aus dem Drucktank im Osmosebetrieb durch die semipermeable Membran gefördert. Dadurch findet eine Rückspülung statt.

Somit ermöglicht die Erfindung bei jeder Wasserentnahme aus der Vorrichtung eine sehr gute Wasserqualität. Dies ist in vorteilhafter Weise davon unabhängig, wie lange das aufzubereitende Wasser teilweise vor der Entnahme bereits im Umkehrosmosebehälter stand. Zudem werden durch die Rückspülung schwer lösliche Stoffe wie etwa CaCO₃, SiO₂, CaSO₄ etc., die sich als Belag an der semipermeablen Membran anlagern können, immer wieder von dieser entfernt.

Um die semipermeable Membran möglichst geringen mechanischen Belastungen auszusetzen und damit eine lange Lebensdauer der Membran zu ermöglichen, ist in einer Weiterbildung des erfindungsgemäßen Verfahrens vorgesehen, dass die Druckdifferenz, welche an der semipermeablen Membran für das Fördern des Permeats durch die semipermeable Membran hindurch anliegt, im Bereich zwischen 0,05 bar bis 1 bar, vorzugsweise im Bereich zwischen 0,1 bar und 0,5 bar, besonders bevorzugt 0,2 bar bis 0,4 bar liegt.

In einer weiteren vorteilhaften Ausgestaltung des erfindungsgemäßen Verfahrens wird dieses derart durchgeführt, dass auf der Konzentratseite der semipermeablen Membran im Ruhezustand nach der Rückspülung die Leitfähigeit des Wassers einen Wert von weniger als 100 µS/cm aufweist. Des Weiteren kann im Rahmen der Erfindung das Verfahren derart durchgeführt werden, dass der Konzentrationsgradient über die semipermeable Membran zwischen Konzentratseite und Permeatseite im Ruhezustand nach der Rückspülung im Wesentlichen gleich Null ist.

Aufgrund eines mit Hilfe der Erfindung derart niedrigen Konzentrationsgradienten zwischen Konzentrat und Permeat können entsprechend weniger der im Konzentrat vorliegende Salze, Schwermetalle und andere Schadstoffe im Ruhezustand auf die Permeatseite diffundieren. Eine Verunreinigung des Permeats im Ruhezustand wird damit vermieden.

Die Erfindung wird nachfolgend unter Bezugnahme auf die beigefügten Zeichnungen anhand von Ausführungsbeispielen näher erläutert. Gleiche und ähnliche Bauteile sind dabei mit gleichen Bezugszeichen versehen, wobei die Merkmale der verschiedenen Ausführungsbeispiele miteinander kombiniert werden können. Es zeigen:
- Figur 1: eine schematische Darstellung einer Vorrichtung zum Aufbereiten von Trinkwasser mit einem Umkehrosmosebehälter, welche als Teil einer Untertisch-Umkehrosmoseanlage für Trinkwasser unter einer Küchenarbeitsplatte installiert ist nach einer ersten Ausführungsform,
- Figur 2: eine schematische Darstellung einer Vorrichtung zum Aufbereiten von Trinkwasser nach einer zweiten Ausführungsform der Erfindung,
- Figur 3: eine schematische Darstellung einer Vorrichtung zum Aufbereiten von Trinkwasser nach einer dritten Ausführungsform der Erfindung,
- Figur 4: eine schematische Darstellung eines Ventils, wie es in der in den Figuren 1 bis 3 dargestellten Vorrichtung zum Aufbereiten von Trinkwasser eingesetzt werden kann,
- Figur 5: eine schematische Darstellung einer Vorrichtung zum Aufbereiten von Trinkwasser nach einer vierten Ausführungsform der Erfindung
und
- Figur 6: eine schematische Darstellung eines Umkehrosmosebehälters in Form einer Filterkerze für eine Vorrichtung zum Aufbereiten von Trinkwasser nach einer dritten Ausführungsform der Erfindung.

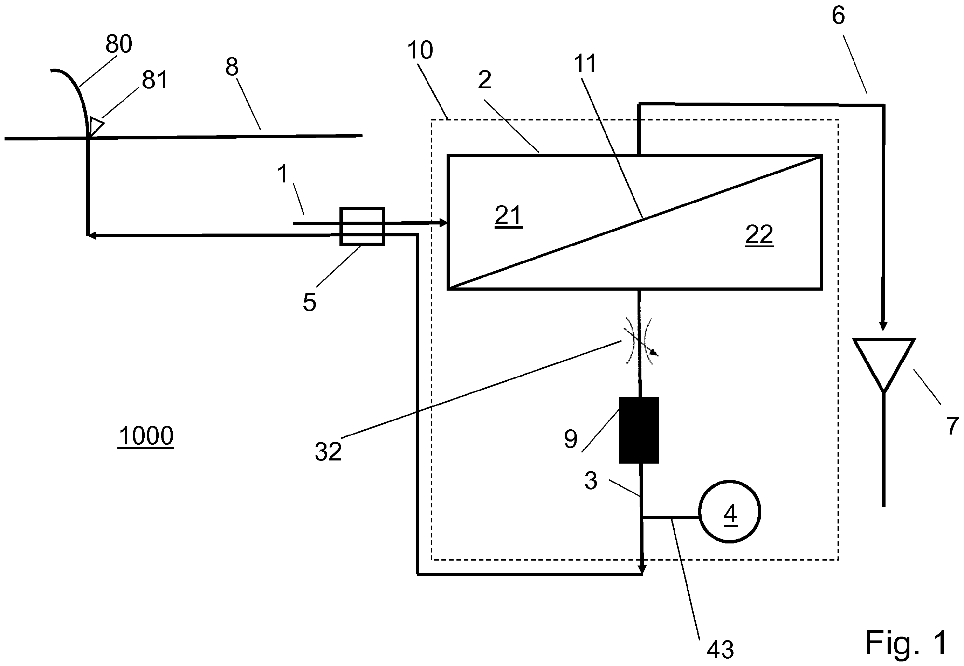

In Figur 1 ist unter einer Küchenarbeitsplatte 8 eine Untertisch-Umkehrosmoseanlage 1000 für Trinkwasser in Haushalten angeordnet. Die Untertisch-Umkehrosmoseanlage 1000 umfasst eine Vorrichtung 10 zum Aufbereiten von Trinkwasser mit einem Umkehrosmosebehälter 2 und einem Drucktank 4.

Die Untertisch-Umkehrosmoseanlage 1000 weist zudem eine Rohwasserleitung 1 sowie eine Leitung 3 für aufbereitetes Wasser auf. Durch die Rohwasserleitung wird Eingangswasser der Vorrichtung 10 zugeführt. Durch die Entnahmeleitung 3 kann im Betrieb aufbereitetes Wasser aus der Vorrichtung 10 entnommen werden.

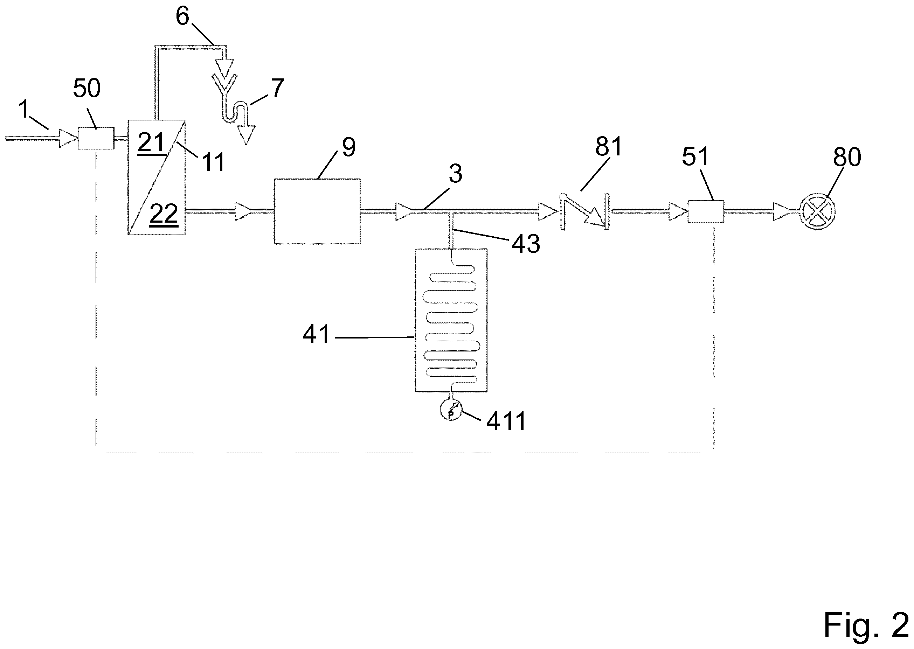

Im Rahmen der Erfindung kann die Untertisch-Umkehrosmoseanlage zusätzlich noch einen weiteren Druckspeicher aufweisen. Dieser kann auf der Permeatseite des Umkehrosmosebehälters 2 angeordnet sein und mit einem Rückflussverhinterer gegenüber diesem abgesichert sein. Ein derartiger weiterer Drucktank wird mit dem Druck beaufschlagt, der unmittelbar vor diesem zusätzlichen Drucktank in der Leitung herrscht, und vor dem Wasserhahn positioniert. In Figur 2 ist eine Ausführungsform einer Untertisch-Umkehrosmoseanlage 1000 in Kombination mit einem solchen zusätzlichen Drucktank 400 dargestellt. Wird der Wasserhahn geöffnet, sorgt der weitere Drucktank 400 dafür, dass über den Wasserhahn stets Permeat mit hinreichendem Druck entnommen werden kann.

Der Drucktank 4, welcher gemäß der Erfindung für die Rückspülung der semipermeablen Membran im Umkehrosmosebehälter 2 mit Permeat eingesetzt wird, ist jedoch ohne Rückflussverhinderer angeschlossen und beaufschlagt die Membran beim Rückspülen mit geringeren Drücken - im Bereich im Bereich zwischen etwa 0,05 bar bis 1 bar - als der Leitungsdruck.

Um eingangsseitig einen ausreichenden, vorzugsweise konstanten, Druck unabhängig von der Aufstellsituation bereitstellen zu können, ist es im Rahmen der Erfindung auch möglich, eine beispielsweise elektrisch betriebene Pumpe in der Zuleitung vorzusehen.

Wie in der Darstellung in Figur 1 weiter gezeigt ist, weist der Umkehrosmosebehälter 2 eine erste Kammer 21 und eine zweite Kammer 22 auf. Zwischen den Kammern 21, 22 ist eine semipermeable Membran 11 angeordnet.

Im Betrieb der Vorrichtung 10 und der Untertisch-Umkehrosmoseanlage 1000 im Entnahmezustand wird das der Vorrichtung 10 und damit dem Umkehrosmosebehälter 2 zugeführte Eingangswasser mit einer Leitfähigkeit von beispielsweise 500 µS durch die semipermeable Membran 11 gefördert. Dabei werden in der ersten Kammer 21 im Eingangswasser gelöste Stoffe zurückgehalten, so dass ein Konzentrat entsteht. Das Konzentrat mit einer Leitfähigkeit von beispielsweise 1000 µS kann über die Konzentratleitung 6 aus der Vorrichtung 10 abgeführt und über eine Abwasserleitung 7 verworfen werden.

In die zweiten Kammer 22 gelangt während der Förderung des Eingangswassers durch die semipermeable Membran 11 im Betrieb der Vorrichtung 10 und der Untertisch-Umkehrosmoseanlage 1000 im Entnahmezustand Wasser mit einer deutlich verminderten Konzentration gelöster Stoffe. Dieses Permeat wird über eine Leitung 3 als aufbereitetes Wasser entnommen.

Über eine Leitung 43 wird ein mit der Permeatleitung 3 verbundener Drucktank 4 mit Permeat gefüllt, wenn das Ventil 81 geschlossen ist. Das Absperrventil 5 bleibt nach dem Schließen 81 noch geöffnet, bis sich der Drucktank gefüllt 4 hat.

Dies erfolgt rein hydraulisch. Der Drucktank 4 hat beispielsweise ein Fassungsvermögen im Bereich zwischen etwa 0,1 L bis 5 L, wobei bevorzugt das Volumen des Drucktanks etwa 0,5 L bis 1 L beträgt.

Im der folgenden Tabelle sind Messwerte aus dem Betrieb einer erfindungsgemäßen Vorrichtung zum Aufbereiten von Trinkwasser mit einem Drucktank mit einem Fassungsvermögen von 750 mL angegeben.

| Datum | Volumen Feed | Zeit | | Leitfähigkeit | | | | Volumen für Abspülung |
|---|---|---|---|---|---|---|---|---|
| | [Liter] | [Minuten] | PEAK | FEED | Permeat FLOW/TAN K | Konzentrat | Volumen, bis Peak abgebaut ist | |
| 31.01.2018 | 2077 | **2** | **13,8 µS/cm** | 340, µS/cm | 5,9 µS/cm | 546, µS/cm | 200ml | 750 ml |
| 01.02.2018 | 2238 | **5** | **18, µS/cm** | 340, µS/cm | 5,6 µS/cm | 559, µS/cm | 300ml | 750 ml |
| 01.02.2018 | 2285 | **10** | **16,4 µS/cm** | 340, µS/cm | 5,6 µS/cm | 554, µS/cm | 400ml | 750 ml |
| 01.02.2018 | 2312 | **30** | **27,9 µS/cm** | 340, µS/cm | 5,6 µS/cm | 554, µS/cm | 500ml | 750 ml |
| 08.02.2018 | 2979 | **60** | **59, µS/cm** | 344, µS/cm | 6,7 µS/cm | 568, µS/cm | 650ml | 750 ml |
| 08.02.2018 | 2986 | **2h** | **84, µS/cm** | 340, µS/cm | 6, µS/cm | 566, µS/cm | 650ml | 750 ml |
| 12.02.2018 | 3205 | **5h** | **85, µS/cm** | 348, µS/cm | 6, µS/cm | 571, µS/cm | 650ml | 750 ml |
| 13.02.2018 | 3225 | **1T** | **115, µS/cm** | 348, µS/cm | 5,9 µS/cm | 571, µS/cm | 750ml | 750 ml |
| 15.02.2018 | 3123 | **2T** | **98,8 µS/cm** | 347, µS/cm | 5,8 µS/cm | 562, µS/cm | 750ml | 750 ml |

Bei den Messungen, die obiger Tabelle zugrunde liegen, wurde ein Drucktank mit 750 mL Permeat zur Rückspülung verwendet. Die "Zeit" ist die Stillstandszeit, bevor die Entnahme gestartet wird. In der Tabelle ist sie in Minuten angeben, sofern nichts Anderes vermerkt ist. Der "Peak" gibt die hohe Konzentration im entnommenen Permeat am Anfang der Entnahme an der Entnahmestelle an, also die Leitfähigkeit des entnommenen Permeats unmittelbar zu Beginn des Entnahmebetriebszustands. Das benötigte "Volumen, bis Peak abgebaut ist" ist zwar immer geringer als das oder gleich dem Volumen des Drucktanks vom 750 mL. Um auch nach ca. einem Tag Stagnation noch sicher unter einer Leitfähigkeit von 100 □S/cm unmittelbar zu Beginn der Entnahme ("Peak") zu bleiben, kann das Volumen des Drucktanks erhöht werden, beispielsweise auf 1 L.

Als Druckbehälter kann auch ein Vorratsbehälter (nicht dargestellt) eingesetzt werden, welcher mit einer Pumpe (nicht dargestellt) verbunden ist. Im Entnahmezustand wird auch in diesem Fall, insbesondere hydraulisch, aufbereitetes Wasser in den Vorratsbehälter gefördert.

Wenn keine Entnahme erfolgt, befindet sich die Vorrichtung 10 und damit die Untertisch-Umkehrosmoseanlage 1000 im Ruhezustand. Dieser wird auch als "Stand-by Zustand" bezeichnet. Mit Wegfall des Drucks durch das im Entnahmezustand in die Kammer 21 und damit auf die Membran 11 strömende Wasser entsteht durch den dabei im Drucktank 4 aufgebauten Druck bei Eintreten des Ruhezustands ein Druck von Seiten der zweiten Kammer 22 aus auf die Membran 11 durch das aus dem Drucktank 4 geförderte Permeat.

Die Entleerung des Drucktanks 4 nach Eintreten des Ruhezustands bis zum Ausgleich der während des Entnahmezustands aufgebauten Druckdifferenz zwischen Drucktank 4 und erster Kammer 21 bewirkt das erfindungsgemäße automatische Rückspülen der semipermeablen Membran mit den oben beschriebenen Vorteilen und Wirkungen Wird als Druckbehälter ein Vorratsbehälter (nicht dargestellt) eingesetzt, welcher mit einer Pumpe (nicht dargestellt) verbunden ist, ist die Pumpe dann derart angeschlossen, dass sie unter Ansprechen auf ein Ende des Entnehmens von Permeat in Betrieb gesetzt wird und dadurch im Vorratsbehälter gesammeltes aufbereitetes Wasser in die zweite Kammer 22 des Umkehrosmosebehälters 2 und durch die semipermeable Membran 11 fördert.

Da das Rückspülen von der zweiten Kammer 22, in welcher sich nach der Entnahmephase Permeat befindet, in die erste Kammer, in welcher sich Konzentrat befindet, einen Betrieb der semipermeablen Membran in Richtung der Osmose statt der Umkehrosmose darstellt, reichen geringe Werte für den Druck aus, welcher mittels des Drucktanks beziehungsweise der Pumpe aufgebracht wird, um das Rückspülen zu ermöglichen.

Insbesondere wenn die Vorrichtung 10 noch mit einer Zugabeeinrichtung für Chlor (nicht dargestellt) zu Desinfektionszwecken für den Fall belasteten Rohwassers ausgestattet ist, weist sie des Weiteren eine Absorptionseinrichtung auf, um das Chlor vor der Entnahme des gereinigten Wassers wieder zu entfernen. Dazu ist im gezeigten Ausführungsbeispiel ein Aktivkohleblock 9 vorgesehen.

Die Untertisch-Umkehrosmoseanlage 1000 weist außerdem ein Absperrventil 5 auf, welches die Rohwasserleitung 1 und die Entnahmeleitung 3 derart koppelt, dass bei Öffnen des Ventils 5 gleichzeitig aufzubereitendes Wasser der Umkehrosmose zugeführt und aufbereitetes Wasser entnommen wird. Das Absperrventil 5 kann dabei mit dem Ventil 81 des Wasserhahns 80 gekoppelt sein oder diesen ersetzen.

Das Absperrventil 5 bewirkt im Betrieb der Vorrichtung 10, dass sich bei geschlossenem Ventil 81 des Wasserhahns 80 die Vorrichtung 10 zum Aufbereiten von Trinkwasser mit Rohwasser befüllt. Wird das Ventil 81 des Wasserhahns 80 geöffnet, kann daher sofort Wasser entnommen werden, weil Wasser mit entsprechendem Druck bereits zur Verfügung steht.

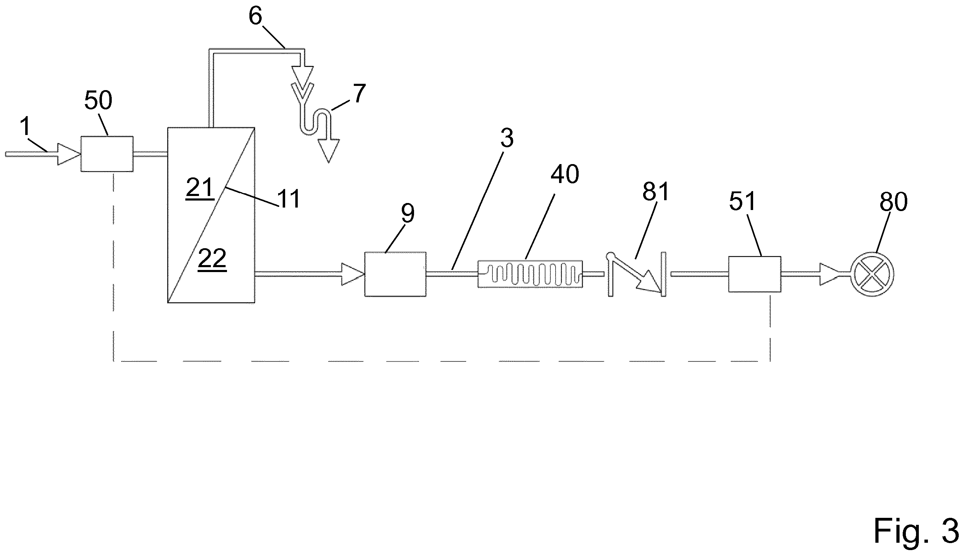

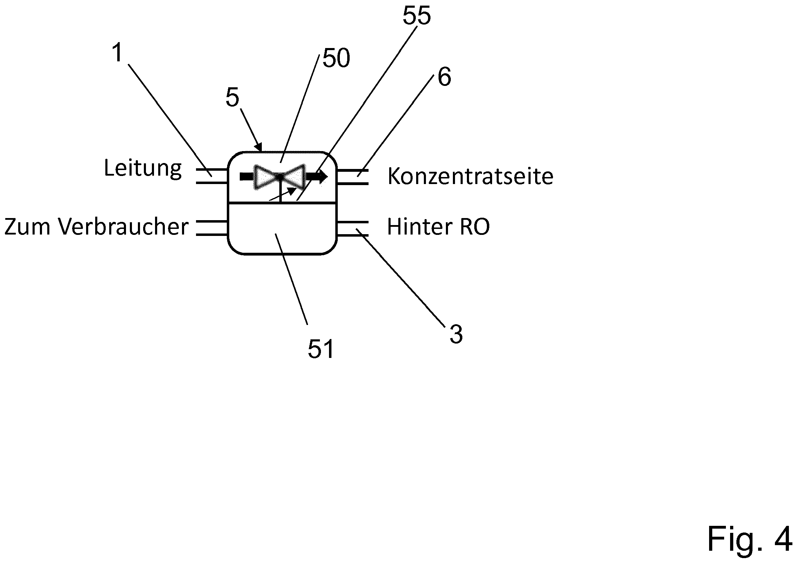

In den Figuren 2 und 3 sind weitere Ausführungsformen der Erfindung dargestellt, bei welchen zur Illustration der Funktion des Absperrventils 5 dieses zweiteilig eingezeichnet ist. In der realen Ausführung handelt es sich jedoch um ein einteiliges Bauteil. Dieses ist in Figur 4 dargestellt.

Im Rahmen dieser Anmeldung wird neben dem Begriff "Absperrventil" auch der Ausdruck "Abschaltventil" entsprechend "Shut-Off Valve" verwendet.

Das Absperrventil 5 öffnet bei der Entnahme von Wasser den Zustrom von Rohwasser in die Konzentratseite der Osmoseanlage. Nach der Beendigung der Wasserentnahme, also z.B. nach dem Schließen des Wasserhahns, stellt das Absperrventil sicher, dass noch so lange Rohwasser über die Konzentratseite fließt, bis sich auf der Permeatseite wieder Druck aufgebaut hat, insbesondere der Druckbehälter wieder unter Druck steht. Erst dann schließt das Absperrventil den Rohwasserzufluss zur Konzentratseite. Hierzu vergleicht das Absperrventil den Druck zwischen Konzentratseite und Permeatseite und schließt bei Unterschreiten einer bauartbedingten Druckdifferenz die Rohwasserzufuhr zur Konzentratseite.

Das Absperrventil 5 kann hierzu zwei Durchläufe 50, 51 aufweisen, welche über miteinander korrespondierende Membranen in Kontakt stehen.

Das Absperrventil 5 ist insbesondere zur Verwendung in einer Vorrichtung zum Aufbereiten von Trinkwasser mit einem Umkehrosmosebehälter 2 vorgesehen und umfasst ein Gehäuse, das einen Innenraum definiert, der mit einem Wassereinlass an die Zuwasserleitung 1 und mit einem Wasserauslass an die Konzentratleitung 6 und damit an die Abwasserleitung 7 angeschlossen ist. Dieser Fluidpfad ist der erste Durchlauf 50 des Absperrventils 5. Des Weiteren steht der Innenraum des Ventils 5 durch seinen zweiten Durchlauf 51 mit der Permeatleitung 3 in Verbindung.

Das Abschaltventil 5 kann ferner z.B. einen Kolben aufweisen, welcher an eine Membranplatte gekoppelt ist und zum selektiven Öffnen und Schließen des ersten Durchlaufes 50 ausgebildet ist. Zudem ist mindestens eine weitere Membran mit dem Kolben und der Membranplatte gekoppelt. Bei Änderung des Permeatdrucks öffnet oder schließt der Kolben den ersten Durchlaufes 50 aufgrund der Auslenkung der mindestens einen Membran in Reaktion auf die Permeatdruckänderungen im zweiten Durchlauf 51. Die Membranplatte, der Kolben und die mindestens eine weitere Membran bilden somit eine hydraulische Schalteinrichtung, die in der schematischen Darstellung in Figur 4 mit dem Bezugszeichen 55 versehen ist.

Das Schließen beziehungsweise Öffnen des ersten Durchlaufes 50 beziehungsweise des zweiten Durchlaufes 51 des Abschaltventils erfolgt ausschließlich durch die Auslegung der beiden Membranen in den Durchläufen des Shut-Off Valve.

Beim Schließen des Verbrauchers, also beispielsweise des Ventils 81 des Wasserhahns 80, bleibt der erste Durchlauf 50 des Abschaltventils 5 noch geöffnet. Während der Druckspeicher 4 befüllt wird, steigt der Druck im System an, bis ein bestimmter Druck erreicht wird. Die Druckdifferenz zwischen den Durchläufen 50, 51 sinkt dadurch. Ab einer bauartbedingten Mindestdruckdifferenz wird das Ventil 5 durch die Membran geschlossen, so dass kein weiteres Wasser durch die Konzentratseite, also die erste Kammer der Umkehrosmose 2 fließt.

Gemäß der Erfindung wird zum Rückspülen der Membran alleine reines Permeat verwendet. Es wird kein anderes Fluid, insbesondere kein Gas wie Druckluft oder ähnliches, in die Permeatleitung 3 eingeleitet, um Permeat entgegen der Strömungsrichtung im Entnahmezustand von Seiten der zweiten Kammer 22 aus durch die Membran 11 in die erste Kammer 21 zu drücken. Damit erlaubt die Erfindung eine besonders einfache und hygienische Bauweise der Vorrichtung 10 zum Aufbereiten von Trinkwasser.

In den Figuren 2 und 3 sind weitere Ausführungsformen dargestellt, bei denen die Funktion des Drucktanks von einem Behälter aus elastischem Material übernommen wird, das im Entnahmezustand mit aufbereitetem Wasser gefüllt und dadurch gedehnt wird, so dass sich eine dieser Dehnung entsprechende Rückstellspannung in dem elastischen Material einstellt. Diese Rückstellspannung steht im Ruhebetriebszustand als Druck zur Verfügung, mit welchem Permeat aus dem Behälter aus elastischen Material von der Permeatleitung aus in die zweite Kammer 22 und durch die Membran 11 gedrückt wird.

In der in Figur 2 dargestellten Ausführungsform ist der Behälter aus elastischem Material als Schlauch 41 ausgebildet, welcher über eine Leitung 43 an die Permeatleitung 3 angeschlossen ist. Der Schlauch 41 kann insbesondere als Silikonschlauch ausgebildet sein. Der endständig an der Leitung 43 positionierte Behälter 41 aus elastischem Material ist mit einem Druckwächterventil 411 versehen, das sich öffnet, wenn ein die Begrenzung aufgrund der Dehnungseigenschaften des elastischen Materials überschreitender Druck im Behälter 41 erreicht wird.

In der in Figur 3 gezeigten Ausführungsform der Erfindung wird diese Sicherheitsfunktion in den zweiten Durchlauf 51 des Abschaltventils integriert. Der Druckbehälter ist als im Betriebszustand durchflossener Behälter 40 aus elastischem Material, beispielsweise als Silikonschlauch, ausgebildet. Der Behälter 40 aus elastischem Material füllt sich mit aufbereitetem Wasser und das elastische Material dehnt sich. Im Ruhebetriebszustand wird diese Dehnung infolge der Rückstellspannung aufgehoben und das Permeat aus dem Behälter 40 wird bei geschlossenem Ventil 81 zurück durch die Permeatleitung 3 in die zweite Kammer 22 und durch die Membran 11 gepresst.

Die Behälter 40, 41 werden in ihrem Durchmesser, ihrer Länge und ihrer Wandstärke abgestimmt insbesondere auf den Strömungswiderstand der Permeatleitung und des Umkehrosmosebehälters sowie den osmotischen Druck derart dimensioniert, dass sich im Entnahmebetriebszustand eine hinreichend große einstellende Rückstellspannung im elastischen Material aufbaut, um im Ruhebetriebszustand ein Rückspülen der Membran sicherzustellen.

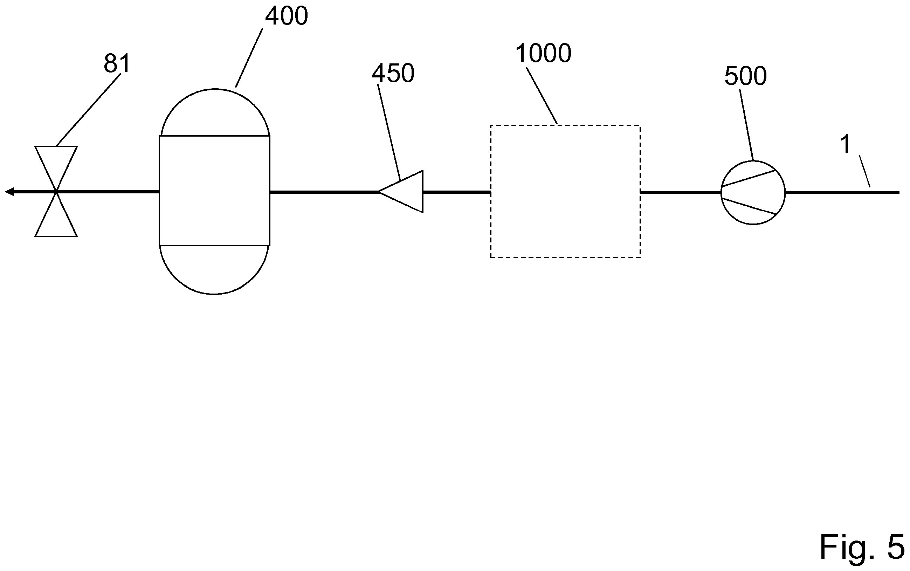

In Figur 5 ist eine Untertisch-Umkehrosmoseanlage 1000 dargestellt, welche mit einem zusätzlichen Drucktank 400 betrieben wird. Dieser zusätzliche Drucktank 400 ist permeatseitig in Strömungsrichtung nach der Untertisch-Umkehrosmoseanlage 1000 vor dem Ventil 81 des Wasserhahns angeordnet. Des Weiteren ist in Figur 5 eine Druckerhöhungspumpe 500 vor dem Einlauf des Rohwassers 1 in die Untertisch-Umkehrosmoseanlage 100 dargestellt. Diese kann im Rahmen der Erfindung auch alternativ zum zusätzlichen Drucktank 400 vorgesehen werden.

In einer vorteilhaften Ausführungsform der Erfindung ist vorgesehen, dass die gesamte Anlage eingehaust ist, so dass die Untertisch-Umkehrosmoseanlage 1000, gegebenenfalls gemeinsam mit einer Druckerhöhungspumpe 500 und/oder einem zusätzlichen Drucktank 400 inklusive Rückflussverhinderer 450 in einem Gehäuse angeordnet sind.

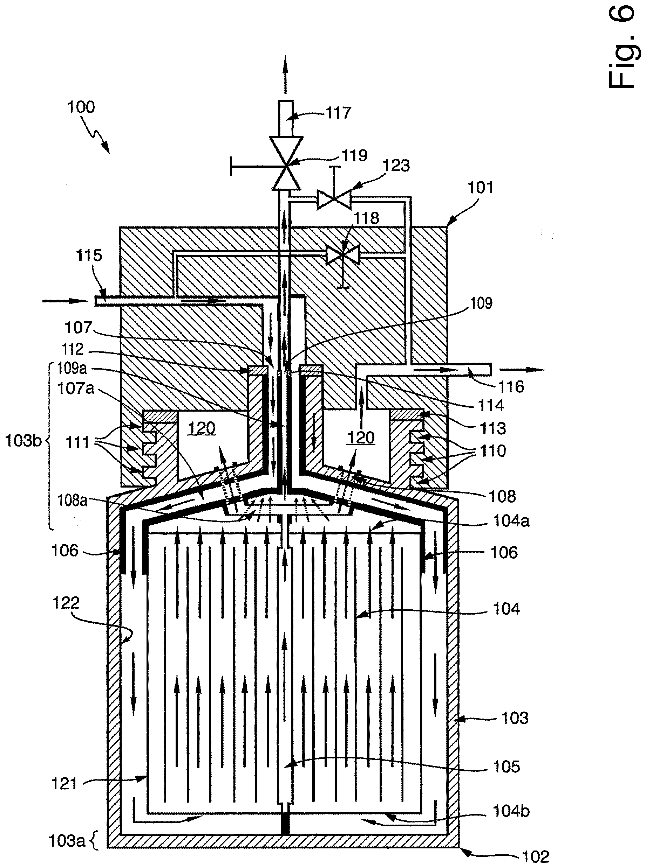

Figur 6 zeigt eine schematische Darstellung einer bevorzugten Ausführungsform eines Umkehrosmosebehälters in Form einer Filterkerze 100 in Querschnittsdarstellung. Diese umfasst eine ortsfest installierte Basiseinheit 101 und eine Umkehrosmoseeinrichtung als Wechseleinheit 102. Diese weist ein Gehäuse 103 aus Kunststoff aus, das einen Boden 103a und ein Kopfteil 103b aufweist.

In dem Gehäuse 103 ist eine Umkehrosmosemembran in Form eines zylindrischen Wickels 104 angeordnet, der eine erste Stirnseite 104a und eine zweite Stirnseite 104b aufweist. Im Zentrum des Wickels befindet sich das Permeatsammelrohr 105. Der Wickel 104 ist über den Adapter 106 an das Kopfteil 103b gekoppelt. Der Adapter 106 stellt Zugänge und Abgänge für eintretendes Wasser und für austretendes Permeat und Konzentrat bereit, nämlich die Eintrittsöffnung 107, die Austrittsöffnung 108 und die Austrittsöffnung 109. Weiterhin stellt der Adapter den Eintrittskanal 107a und die Austrittskanäle 108a und 109a bereit, von denen der Kanal 108a die Austrittsöffnung 108 mit dem Permeatsammelrohr 105 verbindet, während das Konzentrat über den Austrittskanal 109a der Austrittsöffnung 109 zugeführt wird.

Mit der Basiseinheit 101 ist die Wechseleinheit 102 durch Verschraubung verbunden. Die Basiseinheit 101 weist zu diesem Zweck das Innengewinde 110 auf, die Wechseleinheit 103 das Außengewinde 111. Im Bereich der Austrittsöffnungen 108 und 109 sind zwischen der Basiseinheit 101 und der Wechseleinheit 102 die Dichtungen 112 und 114 positioniert. Eine weitere Dichtung 113 findet sich im Bereich der Gewinde 110 bzw. 111.

Die Basiseinheit 101 umfasst einen Einlass 115 für in der Wechseleinheit 102 aufzubereitendes salzhaltiges Wasser, einen Auslass 116 für in der Wechseleinheit gebildetes Permeat und einen Auslass 117 für in der Wechseleinheit 102 gebildetes Konzentrat. Wenn, wie abgebildet, die Wechseleinheit 102 in die Basiseinheit 101 eingeschraubt ist, so sind der Einlass 115 mit der Eintrittsöffnung 107, der Auslass 116 mit der Austrittsöffnung 108 und der Auslass 117 mit der Austrittsöffnung 109 gekoppelt.

Die Basiseinheit 101 kann weiterhin die Verschneideeinrichtungen 118 und/oder 123 sowie gegebenenfalls die Regelvorrichtung 119 umfassen. Mittels der Verschneideeinrichtung 118 kann aus der Umkehrosmoseeinrichtung 102 austretendes Permeat mit über den Einlass 115 in die Basiseinheit 101 eintretendem, salzhaltigem Wasser gemischt werden. Mittels der Verschneideeinrichtung 123 kann aus der Umkehrosmoseeinrichtung 102 austretendes Permeat mit Konzentrat gemischt werden. Mittels der Regelvorrichtung 119 kann die Durchflussmenge des aus der Umkehrosmoseeinrichtung 102 austretenden Konzentrats und damit indirekt die Permeatbildung in der Umkehrosmoseeinrichtung 102 geregelt werden.

Die Strömungsrichtung des aufzubereitenden Wassers bzw. des entstehenden Permeats und Konzentrats innerhalb der Vorrichtung 100 ist durch Pfeile illustriert. Im Betrieb tritt salzhaltiges Wasser über den Einlass 115 in die Basiseinheit 101 ein. Von da aus wird das Wasser über die Eintrittsöffnung 107 in die Wechseleinheit 102 des Umkehrosmosebehälters in Form einer Filterkerze eingespeist. In dieser strömt es über den Eintrittskanal 107a sowie über einen Spalt zwischen dem Mantel 121 des zylindrischen Wickels 104 und der Innenwand 122 des Druckbehälters die zweite Stirnseite 104b an und durchströmt dann den Wickel axial in Richtung der ersten Stirnseite 104a, wobei es zur Bildung von Permeat und Konzentrat kommt.

Während das Permeat über das Permeatsammelrohr 105 abgeführt wird, tritt das Konzentrat aus der ersten Stirnseite 104a des zylindrischen Wickels 104 aus. Permeat aus dem Permeatsammelrohr 105 kann nach oben durch den Kanal 108a und über die Austrittsöffnung 108 in die Basiseinheit 101 eintreten. Hier gelangt es in einen ringförmigen Hohlraum 120, der von der Basiseinheit 101 und der Wechseleinheit 102 eingeschlossen ist. Von dort wird es dem Auslass 116 zugeführt. Aus der ersten Stirnseite 104a des zylindrischen Wickels 104 austretendes Konzentrat fließt über den Austrittskanal 109a zur Austrittsöffnung 109 und mündet in der Basiseinheit 101. Dort wird es dem Auslass 117 zugeführt. Die Menge des aus dem Auslass 117 austretenden Konzentrats lässt sich mittels der Regelvorrichtung 119, bei der es sich meist um ein Ventil handelt, regeln.

Es ist dem Fachmann ersichtlich, dass die Erfindung nicht auf die vorstehend beschriebenen Ausführungsbeispiele beschränkt ist, sondern vielmehr in vielfältiger Weise variiert werden kann. Insbesondere können die einzelnen Merkmale der dargestellten Beispiele auch anders miteinander kombiniert oder gegeneinander ausgetauscht beziehungsweise durch weitere Merkmale ergänzt werden.

### Bezugszeichenliste

- 1: Leitung für Eingangswasser, Rohwasser, aufzubereitendes Wasser, Feed
- 2: Umkehrosmosebehälter
- 21: erste Kammer des Umkehrosmosebehälters
- 22: zweite Kammer des Umkehrosmosebehälters
- 100: Umkehrosmosebehälter in Form einer Filterkerze
- 101: ortsfest installierte Basiseinheit
- 102: Umkehrosmoseeinrichtung als Wechseleinheit
- 103: Gehäuse
- 103a: Boden des Gehäuses
- 103b: Kopfteil des Gehäuses
- 104: Wickel
- 104a: erste Stirnseite des Wickels
- 104b: zweite Stirnseite des Wickels
- 105: Permeatsammelrohr
- 106: Adapter
- 107: Eintrittsöffnung für eintretendes Wasser
- 107a: Eintrittskanal für eintretendes Wasser
- 108: Austrittsöffnung für austretendes Permeat
- 108a: Austrittskanal für austretendes Permeat
- 109: Austrittsöffnung für austretendes Konzentrat
- 109a: Austrittskanal für austretendes Konzentrat
- 110: Innengewinde
- 111: Außengewinde
- 112: Dichtung
- 113: Dichtung
- 114: Dichtung
- 115: Einlass für aufzubereitendes salzhaltiges Wasser
- 116: Auslass 116 für gebildetes Permeat
- 117: Auslass für gebildetes Konzentrat
- 118: Verschneideeinrichtung
- 123: Verschneideeinrichtung
- 119: Regelvorrichtung
- 121: Mantel
- 122: Innenwand
- 3: Permeatleitung, Leitung für aufbereitetes Wasser
- 4: Drucktank, Druckbehälter; oder Vorratsspeicher mit Pumpe
- 40: durchflossener Druckspeicher; Behälter aus elastischem Material, Silikonschlauch
- 41: endständiger Druckspeicher; Behälter aus elastischem Material, Silikonschlauch
- 43: Leitung zwischen Drucktank und Permeatleitung, Leitung zwischen Drucktank und Auslass für das aufbereitete Wasser
- 5: Absperrventil, Abschaltventil, Shut-Off Valve
- 50: erster Durchlauf
- 51: zweiter Durchlauf
- 55: Schalteinrichtung, Kolben mit Membranplatte und weiterer Membran
- 6: Konzentratleitung
- 7: Abwasser
- 8: Küchenarbeitsplatte, Tisch
- 80: Wasserhahn
- 81: Ventil des Wasserhahns
- 9: Absorptionseinrichtung, insbesondere für Desinfektionsmittel, beispielsweise für Chlor; z.B. Aktivkohleblock
- 10: Vorrichtung zum Aufbereiten von Trinkwasser
- 11: semipermeable Membran
- 1000: Untertisch-Umkehrosmoseanlage
- 400: zusätzlicher Drucktank auf der Permeatseite
- 450: Rückschlagventil
- 500: Pumpe zur Förderung des Rohwassers in der Zuleitung

## Patentansprüche

1. Verfahren für die Aufbereitung von Trinkwasser,
bei welchem in einem Entnahmebetriebszustand
aufzubereitendes Trinkwasser im Umkehrosmosebetrieb durch eine semipermeable Membran (11) gefördert und in Permeat und Konzentrat getrennt wird,
**dadurch gekennzeichnet, dass**
während eines Ruhebetriebszustands ein Teil des Permeats mittels eines Überdrucks durch die Membran (11) tritt und dadurch das Konzentrat auf der Konzentratseite der Membran verdrängt und gegebenenfalls vorhandene Ablagerungen auf der Konzentratseite der Membran ablöst, wobei während eines Entnahmestopps das Permeat in einen Drucktank (4) fließt, wodurch im Drucktank (4) ein Permeatvorrat angelegt und unter Druck gesetzt wird, und wobei infolge dieses Druckes während des Ruhebetriebszustands das im Drucktank (4) gespeicherte Permeat zumindest teilweise mittels des Überdrucks durch die Membran (11) tritt und dadurch das Konzentrat auf der Konzentratseite der Membran (4) verdrängt und die gegebenenfalls vorhandenen Ablagerungen auf der Konzentratseite der Membran ablöst.

2. Verfahren für die Aufbereitung von Trinkwasser nach Anspruch 1,
**dadurch gekennzeichnet, dass**
die Druckdifferenz, welche an der semipermeablen Membran (11) für das Fördern des Permeats durch die semipermeable Membran (11) hindurch anliegt, im Bereich zwischen 0,05 bar bis 1 bar, vorzugsweise im Bereich zwischen 0,1 bar und 0,5 bar, besonders bevorzugt 0,2 bar bis 0,4 bar liegt.
und/oder dass
auf der Konzentratseite der semipermeablen Membran (11) im Ruhezustand nach der Rückspülung die Leitfähigkeit des Wassers einen Wert von weniger als 100 µS/cm aufweist.

3. Verfahren für die Aufbereitung von Trinkwasser nach einem der vorstehenden Ansprüche,
**dadurch gekennzeichnet, dass**
der Konzentrationsgradient über die semipermeable Membran (11) zwischen Konzentratseite und Permeatseite im Ruhezustand nach der Rückspülung minimiert wird
und/oder dass
nur im Entnahmebetrieb, nicht aber im Ruhezustand das Eingangswasser desinfiziert wird.

4. Verfahren nach einem der vorstehenden Ansprüche,
**dadurch gekennzeichnet, dass**
ausschließlich aufbereitetes Wasser im Ruhebetriebszustand für die Rückspülung verwendet wird.

5. Vorrichtung (10) zum Aufbereiten von Trinkwasser
mit zumindest einem Umkehrosmosebehälter (2; 100),
welcher von zumindest einer semipermeablen Membran (11) in zumindest zwei Kammern (21, 22) unterteilt ist,
wobei eine erste Kammer (21) einen Einlass für das aufzubereitende Wasser und einen Auslass für das Konzentrat und
eine zweite Kammer (22) einen Auslass für das aufbereitete Wasser, aufweist,
**dadurch gekennzeichnet, dass**
die Vorrichtung (10) zumindest einen Druckbehälter (4) umfasst, welcher mit dem Auslass für das aufbereitete Wasser über eine Leitung (43) verbunden ist,
und wobei die Vorrichtung (10) derart ausgebildet ist, dass in einem Ruhebetriebszustand aufbereitetes Wasser vom dem Druckbehälter (4) aus durch die semipermeable Membran (11) in die erste Kammer (21) zurückfließt,
und wobei der Druckbehälter (4) derart ausgebildet ist, dass während eines Entnahmestopps das Permeat in den Druckbehälter (4) fließt, wodurch im Druckbehälter (4) ein Permeatvorrat angelegt und unter Druck gesetzt wird, wobei infolge dieses Druckes während des Ruhebetriebszustands das im Druckbehälter (4) gespeicherte Permeat zumindest teilweise mittels des Überdrucks durch die Membran (11) tritt und dadurch das Konzentrat auf der Konzentratseite der Membran (1 1)verdrängt und gegebenenfalls vorhandene Ablagerungen auf der Konzentratseite der Membran (11) ablöst.

6. Vorrichtung (10) zum Aufbereiten von Trinkwasser nach Anspruch 5,
**dadurch gekennzeichnet, dass**
der Druckbehälter (4) ein Fassungsvermögen im Bereich zwischen etwa 0,1 L bis 5 L hat, wobei bevorzugt das Volumen des Druckbehälters (4) etwa 0,5 L bis 1 L beträgt.

7. Vorrichtung (10) zum Aufbereiten von Trinkwasser nach Anspruch 5 oder Anspruch 6,
**dadurch gekennzeichnet, dass**
die Vorrichtung (10) für den stromlosen Betrieb ausgebildet ist.

8. Vorrichtung (10) zum Aufbereiten von Trinkwasser nach einem der vorstehenden Ansprüche,
**dadurch gekennzeichnet, dass**
der Druckbehälter (4; 40; 41) ein elastisches Material umfasst, welches derart dimensioniert und angeordnet ist, dass es in einem Entnahmebetriebszustand der Vorrichtung (10) gedehnt wird, so dass sich in dem elastischen Material eine Rückstellspannung einstellt, welche im Ruhebetriebszustand der Vorrichtung (10) zur Entspannung des Materials führt, wodurch aufbereitetes Wasser vom dem Druckbehälter (4; 40; 41) aus durch die semipermeable Membran (11) in die erste Kammer (21) zurückfließt.

9. Vorrichtung (10) zum Aufbereiten von Trinkwasser nach Anspruch 8,
**dadurch gekennzeichnet, dass**
der Druckbehälter (4) eine elastische Membran umfasst.

10. Vorrichtung (10) zum Aufbereiten von Trinkwasser nach Anspruch 8 oder 9,
**dadurch gekennzeichnet, dass**
der Druckbehälter (4) als Schlauch aus elastischem Material, insbesondere als Silikonschlauch, ausgebildet ist.

11. Vorrichtung (10) zum Aufbereiten von Trinkwasser nach Anspruch 5 oder Anspruch 6,
**dadurch gekennzeichnet, dass**
die Vorrichtung als Druckbehälter (4) einen Vorratsbehälter aufweist, welcher mit einer Druckerhöhungseinrichtung, insbesondere mit einer Pumpe, verbunden ist.

12. Vorrichtung (10) zum Aufbereiten von Trinkwasser nach einem der Ansprüche 5 bis 11,
**dadurch gekennzeichnet, dass**
die Vorrichtung (10) eine Zugabeeinrichtung für ein Desinfektionsmittel aufweist, welche mit einer Leitung für das aufzubereitende Wasser, insbesondere mit dem Einlass der ersten Kammer des Umkehrosmosebehälters (2; 100) für das aufzubereitende Wasser, verbunden ist.

13. Vorrichtung (10) zum Aufbereiten von Trinkwasser nach einem der Ansprüche 5 bis 12,
**dadurch gekennzeichnet, dass**
die Vorrichtung (10) eine Absorptionseinrichtung (9), insbesondere für ein Desinfektionsmittel, beispielsweise Chlor, aufweist, welche mit einer Leitung (3) für das Permeat, insbesondere mit dem Auslass der zweiten Kammer (22) des Umkehrosmosebehälters (2; 100) für das aufbereitete Wasser, verbunden ist,
und/oder dass
die Vorrichtung (10) permeatseitig nicht mit einer Abwasserleitung verbunden ist.
und/oder dass
der Umkehrosmosebehälter (100) als Filterkerze ausgebildet ist.

14. Umkehrosmoseanlage (1000) für Trinkwasser in Haushalten umfassend eine Vorrichtung (10) nach einem der Ansprüche 5 bis 13 sowie eine Rohwasserleitung (1) für die Zuführung von aufzubereitendem Wasser, eine Entnahmeleitung (3) für aufbereitetes Wasser und eine Abwasserleitung (6; 7) zur Abfuhr von Konzentrat,
insbesondere **dadurch gekennzeichnet, dass**
die Umkehrosmoseanlage (1000) ein Absperrventil (5) aufweist, welches die Rohwasserleitung (1) und die Entnahmeleitung (3) derart koppelt, dass bei Öffnen des Ventils (5) gleichzeitig aufzubereitendes Wasser der Umkehrosmose zugeführt und aufbereitetes Wasser entnommen wird.

15. Umkehrosmoseanlage (1000) für Trinkwasser nach Anspruch 14,
**dadurch gekennzeichnet, dass**
die Umkehrosmoseanlage (1000) ein Wasserhahnventil (81) aufweist und ein Absperrventil (5; 50, 51) aufweist, welches die Rohwasserleitung (1) und die Entnahmeleitung (3) derart koppelt, dass beim Schließen des Wasserhahnventils (81) das Absperrventil (5) noch so lange geöffnet ist, bis der Drucktank (4) gefüllt ist und eine vorbestimmbare Druckdifferenz erreicht ist.

## Claims

1. A method for purifying drinking water, in which, during an extraction operation mode, comprises conveying drinking water to be purified through a semipermeable membrane (11) in reverse osmosis operation and separating it into permeate and concentrate;
**characterized in that**,
during an idle operation state, part of the permeate passes through the membrane (11) due to an overpressure and thereby displaces the concentrate on the concentrate side of the membrane and removes any deposits that may be present on the concentrate side of the membrane,
wherein during an extraction stop, the permeate flows into a pressure tank (4), whereby a supply of permeate accumulates and is pressurized in the pressure tank (4);
and wherein, during the idle operation state, as a result of this pressure, at least part of the permeate accumulated in the pressure tank (4) passes through the membrane (11) due to the overpressure and thereby displaces the concentrate on the concentrate side of the membrane (11) and removes the deposits that may be present on the concentrate side of the membrane.

2. The method for purifying drinking water as claimed in claim 1, wherein
the pressure difference applied across the semipermeable membrane (11) for conveying the permeate through the semipermeable membrane (11) is in a range between 0.05 bar and 1 bar, preferably in a range between 0.1 bar and 0.5 bar, most preferably between 0.2 bar and 0.4 bar,
and/or
on the concentrate side of the semipermeable membrane (11), the water has a conductivity of less than 100 µS/cm in the idle state after backflushing.

3. The method for purifying drinking water as claimed in any of the preceding claims, wherein
the concentration gradient across the semipermeable membrane (11) between the concentrate side and the permeate side is minimized in the idle state, after backflushing and/or wherein
the inlet water is disinfected only during extraction operation, but not in the idle state.

4. The method as claimed in any of the preceding claims, wherein
only purified water is used for backflushing in the idle operation state.

5. A device (10) for purifying drinking water,
comprising at least one reverse osmosis container (2; 100) which is divided by at least one semipermeable membrane (11) into at least two chambers (21, 22);
wherein a first chamber (21) has an inlet for the water to be purified and an outlet for concentrate, and
a second chamber (22) has an outlet for purified water; **characterized in that** the device (10) comprises at least one pressure vessel (4) which is connected to the outlet for the purified water via a conduit (43);
and wherein the device (10) is configured so that in an idle operation state purified water flows back through the semipermeable membrane (11), from the pressure vessel (4) into the first chamber (21),
and wherein the pressure tank (4) is configured that, wherein during an extraction stop, the permeate flows into the pressure tank (4), whereby a supply of permeate accumulates and is pressurized in the pressure tank (4);
and wherein, during the idle operation state, as a result of this pressure, at least part of the permeate accumulated in the pressure tank (4) passes through the membrane (11) due to the overpressure and thereby displaces the concentrate on the concentrate side of the membrane (11) and removes the deposits that may be present on the concentrate side of the membrane (11).

6. The device (10) for purifying drinking water of claim 5, wherein
the pressure vessel (4) has a holding capacity in a range between approximately 0.1 liter and 5 liters, wherein preferably the volume of the pressure vessel (4) is approximately from 0.5 liter to 1 liter.

7. The device (10) for purifying drinking water of claim 5 or claim 6, wherein
the device (10) is designed for operation without electric power.

8. The device (10) for purifying drinking water as claimed in any of the preceding claims, wherein
the pressure vessel (4; 40; 41) comprises an elastic material which is dimensioned and arranged so as to expand during an extraction operation state of the device (10), so that a restoring force is created in the elastic material, which during the idle operation state of the device (10) causes the material to relax, whereby purified water flows back from the pressure vessel (4; 40; 41) through the semipermeable membrane (11) into the first chamber (21).

9. The device (10) for purifying drinking water of claim 8, wherein
the pressure vessel (4) comprises an elastic diaphragm.

10. The device (10) for purifying drinking water of claim 8 or 9, wherein
the pressure vessel (4) is in the form of a flexible tube made of elastic material, in particular a silicone tube.

11. The device (10) for purifying drinking water of claim 5 or claim 6, wherein
the device comprises a pressure vessel (4) in the form of a reservoir that is connected to a pressure boosting device, in particular to a pump.

12. The device (10) for purifying drinking water as claimed in any of claims 5 to 11, wherein
the device (10) comprises a disinfectant feeding means which is connected to a conduit for the water to be purified, in particular to the inlet of the first chamber of the reverse osmosis container (2; 100) for the water to be purified.

13. The device (10) for purifying drinking water as claimed in any of claims 5 to 12, wherein
the device (10) comprises an absorption means (9), in particular for a disinfectant such as chlorine, which is connected to a permeate conduit (3), in particular to the outlet of the second chamber (22) of the reverse osmosis container (2; 100) for the purified water
and/or wherein the device (10) is not connected to a wastewater conduit on the permeate side
and/or wherein the reverse osmosis container (100) is in the form of a filter candle.

14. A reverse osmosis system (1000) for domestic drinking water, comprising
a device (10) as claimed in any of claims 8 to 18, and a raw water conduit (1) for feeding water to be purified, an extraction conduit (3) for purified water, and a wastewater conduit (6; 7) for discharging concentrate,
in particular wherein the reverse osmosis system (1000) comprises a shut-off valve (5) which couples the raw water conduit (1) and the extraction conduit (3) in such a way that when the valve (5) is opened, water to be purified is supplied to reverse osmosis and at the same time purified water is extracted.

15. The reverse osmosis system (1000) for drinking water of claim 14, wherein
the reverse osmosis system (1000) comprises a faucet valve (81) and a shut-off valve (5; 50, 51) which couples the raw water conduit (1) and the extraction conduit (3) in such a way that when the faucet valve (81) is closed the shut-off valve (5) is still open until the pressure tank (4) is filled and a predefined pressure differential is reached.

## Revendications

1. Procédé de traitement de l'eau potable,
par lequel, dans un mode de prélèvement, de l'eau potable à traiter est acheminée en mode d'osmose inverse par une membrane semi-perméable (11) et est séparée en perméat et en concentré,
**caractérisé en ce que**
pendant un état de repos, une partie du perméat traverse la membrane (11) au moyen d'une surpression, refoule ainsi le concentré sur le côté concentré de la membrane et détache les dépôts éventuellement présents sur le côté concentré de la membrane, le perméat s'écoulant dans un réservoir sous pression (4) pendant un arrêt du prélèvement, ce qui crée et met sous pression une réserve de perméat dans le réservoir sous pression (4), et moyennant quoi, en raison de cette pression pendant le mode de repos, le perméat stocké dans le réservoir sous pression (4) traverse au moins partiellement la membrane (11) au moyen de la surpression, refoule ainsi le concentré sur le côté concentré de la membrane (4) et détache les dépôts éventuellement présents sur le côté concentré de la membrane.

2. Procédé de traitement de l'eau potable selon la revendication 1,
**caractérisé en ce que**
la différence de pression qui est appliquée à la membrane semi-perméable (11) pour l'acheminement du perméat par la membrane semi-perméable (11) se situe dans une plage comprise entre 0,05 bar et 1 bar, préférablement dans une plage comprise entre 0,1 bar et 0,5 bar, particulièrement préférablement dans une plage comprise entre 0,2 bar et 0,4 bar,
et/ou **en ce que**
sur le côté concentré de la membrane semi-perméable (11), à l'état de repos après le rétrolavage, la conductivité de l'eau présente une valeur inférieure à 100 µS/cm.

3. Procédé de traitement de l'eau potable selon l'une des revendications précédentes,
**caractérisé en ce que**
le gradient de concentration par la membrane semi-perméable (11) entre le côté concentré et le côté perméat est minimisé à l'état de repos après le rétrolavage
et/ou **en ce que**
l'eau d'entrée n'est désinfectée qu'en mode de prélèvement, mais pas à l'état de repos.

4. Procédé selon l'une des revendications précédentes,
**caractérisé en ce que**
exclusivement de l'eau traitée est utilisée pour le rétrolavage en mode de repos.

5. Procédé (10) de traitement de l'eau potable,
avec au moins un réservoir d'osmose inverse (2 ; 100), qui est divisé par au moins une membrane semi-perméable (11) en au moins deux compartiments (21, 22),
un premier compartiment (21) ayant une entrée pour l'eau à traiter et une sortie pour le concentré, et
un deuxième compartiment (22) ayant une sortie pour l'eau traitée,
**caractérisé en ce que**
le dispositif (10) comprend au moins un réservoir sous pression (4) qui est relié à la sortie pour l'eau traitée par une conduite (43),
et le dispositif (10) étant conçu de telle sorte que, dans un mode de repos, l'eau traitée s'écoule en retour du réservoir sous pression (4) par la membrane semi-perméable (11) dans le premier compartiment (21),
et le récipient sous pression (4) étant conçu de telle sorte que, pendant un arrêt du prélèvement, le perméat s'écoule dans le récipient sous pression (4), ce qui crée et met sous pression une réserve de perméat dans le récipient sous pression (4), et moyennant quoi, en raison de cette pression pendant le mode de repos, le perméat stocké dans le récipient sous pression (4) traverse au moins partiellement la membrane (11) au moyen de la surpression, refoule ainsi le concentré sur le côté concentré de la membrane (11) et détache les dépôts éventuellement présents sur le côté concentré de la membrane (11).

6. Procédé (10) de traitement de l'eau potable selon la revendication 5,
**caractérisé en ce que**
le récipient sous pression (4) a une capacité comprise entre environ 0,1 1 et 5 l, le volume du récipient sous pression (4) étant de préférence d'environ 0,5 1 à 1 1.

7. Procédé (10) de traitement de l'eau potable selon la revendication 5 ou la revendication 6,
**caractérisé en ce que**
le dispositif (10) est conçu pour fonctionner sans électricité.

8. Procédé (10) de traitement de l'eau potable selon l'une des revendications précédentes,
**caractérisé en ce que**
le réservoir sous pression (4 ; 40 ; 41) comprend un matériau élastique qui est dimensionné et disposé de manière à être étiré dans un mode de prélèvement du dispositif (10) de manière à ce qu'une contrainte de rappel s'établisse dans le matériau élastique, entraînant la détente du matériau dans le mode de repos du dispositif (10), moyennant quoi l'eau traitée s'écoule en retour dans le premier compartiment (21) depuis le réservoir sous pression (4 ; 40 ; 41) par la membrane semi-perméable (11).

9. Procédé (10) de traitement de l'eau potable selon la revendication 8,
**caractérisé en ce que**
le récipient sous pression (4) comprend une membrane élastique.

10. Procédé (10) de traitement de l'eau potable selon la revendication 8 ou 9,
**caractérisé en ce que**
le récipient sous pression (4) est conçu comme un tuyau en matériau élastique, en particulier comme un tuyau en silicone.

11. Procédé (10) de traitement de l'eau potable selon la revendication 5 ou la revendication 6,
**caractérisé en ce que**
le dispositif comme réservoir de pression (4) présente un réservoir de stockage qui est relié à un dispositif d'augmentation de la pression, en particulier à une pompe.

12. Procédé (10) de traitement de l'eau potable selon l'une des revendications 5 à 11,
**caractérisé en ce que**
le dispositif (10) comprend un dispositif d'ajout pour un désinfectant, lequel est relié à une conduite pour l'eau à traiter, en particulier à l'entrée du premier compartiment du réservoir d'osmose inverse (2 ; 100) pour l'eau à traiter.

13. Procédé (10) de traitement de l'eau potable selon l'une des revendications 5 à 12,
**caractérisé en ce que**
le dispositif (10) comprend un dispositif d'absorption (9), en particulier pour un désinfectant, par exemple du chlore, lequel est relié à une conduite (3) pour le perméat, en particulier à la sortie du deuxième compartiment (22) du réservoir d'osmose inverse (2 ; 100) pour l'eau traitée,
et/ou **en ce que**
le dispositif (10) n'est pas relié, côté perméat, à une conduite d'évacuation,
et/ou **en ce que**
le réservoir d'osmose inverse (100) est conçu comme une bougie filtrante.

14. Installation d'osmose inverse (1000) pour eau potable dans les ménages, comprenant un dispositif (10) selon l'une des revendications 5 à 13, ainsi qu'une conduite d'eau brute (1) pour l'amenée d'eau à traiter, une conduite de prélèvement (3) pour l'eau traitée et une conduite d'évacuation (6 ; 7) pour l'évacuation du concentré,
**caractérisée** en particulier en ce que
l'installation d'osmose inverse (1000) présente une vanne d'arrêt (5) qui couple la conduite d'eau brute (1) et la conduite de prélèvement (3) de manière à ce que, lors de l'ouverture de la vanne (5), de l'eau à traiter soit simultanément amenée à l'osmose inverse et de l'eau traitée soit prélevée.

15. Installation d'osmose inverse (1000) pour eau potable selon la revendication 14,
**caractérisée en ce que**
l'installation d'osmose inverse (1000) présente une vanne de robinet d'eau (81) et présente une vanne d'arrêt (5 ; 50, 51) qui couple la conduite d'eau brute (1) et la conduite de prélèvement (3) de manière à ce que, lors de la fermeture de la vanne de robinet d'eau (81), la vanne d'arrêt (5) soit encore ouverte jusqu'à ce que le réservoir sous pression (4) soit rempli et qu'une différence de pression prédéterminable soit atteinte.
